# EUROPEAN PATENT APPLICATION

(11) **EP 3 851 705 A1**
(43) Date of publication of application: **21.07.2021**
(21) Application number: 21151936.8
(22) Date of filing: 15.01.2021
(51) Int. Cl.: F16H 48/24, F16H 48/30

(54) **VEHICULAR DIFFERENTIAL ASSEMBLY**

(30) Priority: 17.01.2020 IT 202000000847
(71) Applicant: FPT Industrial S.p.A., 10156 Torino (IT)
(72) Inventor: ROSSIA, Giorgio, 10141 TORINO (IT); MELLUSO, Massimo, 10146 TORINO (IT)
(74) Representative: Faraldi, Marco

(57) **Abstract**

A vehicular differential assembly (1) includes a planet gear cage (9) rotatable about an axis (B) and defining an internal cavity, a member (7) arranged inside the cavity in a rotatable manner around the axis (B), a first clutch portion (14) coupled to the planet gear cage (9) in an axially movable and angularly fixed manner, a second clutch portion (15) carried by the member (7) in a fixed position so as to engage with the first clutch portion (14), and an actuator (23) for moving the first clutch portion (14) along the axis (B) between a first position, in which the second clutch portion (15) is spaced from the first clutch portion (14), and a second position, in which the second clutch portion (15) is engaged with the first clutch portion (14).

## Description

### CROSS-REFERENCE TO RELATED APPLICATIONS

This patent application claims priority from Italian patent application no. 102020000000847 filed on January 17, 2020.

### TECHNICAL FIELD

The present invention relates to a vehicular differential assembly.

### STATE OF THE PRIOR ART

As is known, vehicles are equipped with transmission systems which include differentials having the function of allowing the two wheels of an axle to rotate at different speeds, for example when driving on curves.

It is also known that the same differentials can cause difficult conditions in the forward movement of vehicles when only one of the two wheels is in the condition of scarce adhesion to the ground and slips with respect to the latter.

In such case, in fact, the power delivered by the engine is almost totally transferred to the slipping wheel, thus the vehicle remains substantially stationary in its position.

For this reason, some differentials are also provided with relative locking mechanisms which, when actuated, inhibit the speed differentiation, such that the abovementioned difficult conditions in the forward movement do not occur.

In general, the need is felt to improve the known differentials that are provided with such locking mechanisms.

For example, the document US2008/0182702 A1 describes a differential assembly having a differential housing, two sun gears and a locking mechanism, wherein there is a first clutch carried in a fixed position by one of the two sun gears and a second clutch carried inside the housing in a rotationally fixed manner and axially mobile by means of a splined coupling inside the housing. The locking mechanism further includes a thrust member, which is arranged outside the housing in an axially mobile manner with respect thereto by means of a linear actuator and carries a plurality of legs which traverse respective openings of the housing so as to push the second clutch, to which the thrust member is fixed, towards the first clutch, so as to lock the differential assembly. In order for this to be implemented, the actuator is consequently mounted on the outside of the housing so as to rigidly rotate with the housing. Therefore, the actuator is an actuator particularly suitable for the solution described above, such as for example the actuator described in US 11/507,311. Therefore, the differential assembly suffers from the presence of a high number of components coupled to one another in a complex manner, as well as from the need to use a dedicated actuator instead of a common actuator coupled to the housing in a customary manner.

The object of the invention is to satisfy such need, preferably in a simple and cost-effective manner.

### SUMMARY OF THE INVENTION

According to the invention, a vehicular differential assembly is provided as claimed in the appended claims.

The dependent claims define particular embodiments of the invention.

### BRIEF DESCRIPTION OF THE DRAWINGS

In the following, a preferred embodiment of the invention is described by way of non-limiting example and with reference to the accompanying drawings, wherein:
- Figure 1 shows a section of a differential assembly according to the invention, arranged according to a first operating configuration;
- Figure 2 shows, on an enlarged scale, a detail of Figure 1; and
- Figure 3 is similar to Figure 1 and shows the differential assembly in a second operating configuration.

### DETAILED DESCRIPTION OF THE INVENTION

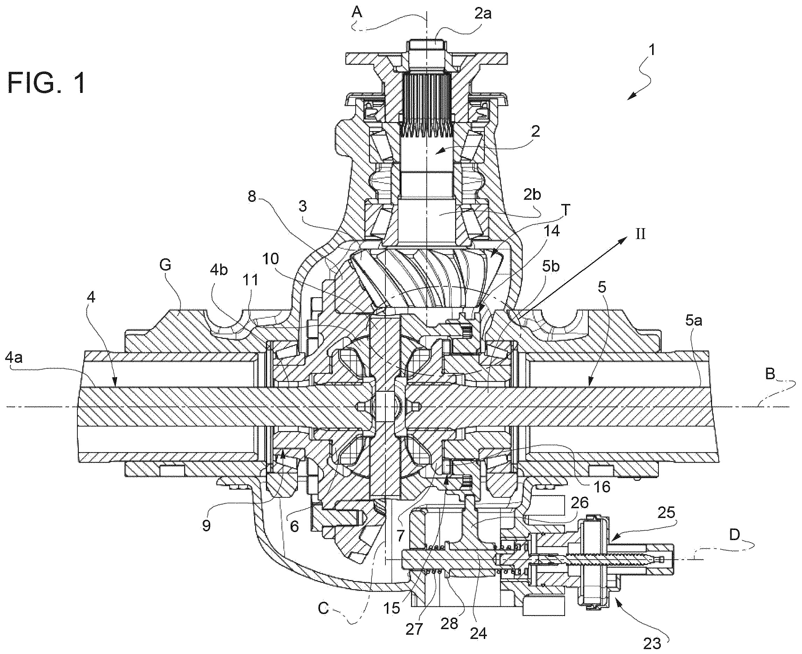

With reference to Figure 1, reference numeral 1 indicates, as a whole, a vehicular differential assembly, which comprises a transmission device T adapted to receive power inputted from an engine (not illustrated) and to distribute the received power to a pair of wheels (not illustrated).

The differential assembly 1 further comprises an outer case G, which is fixed with respect to the engine and houses at least partially the transmission device T.

More specifically, in order to receive the power from the engine, the transmission device T comprises a pinion shaft 2, which is arranged along an input axis A and is supported by the outer case G in a rotatable manner around the axis A.

The pinion shaft 2 extends between a first end 2a connected to the engine and a second end 2b, which carries in a fixed position a pinion 3 rotatable about the input axis A. In particular, the pinion 3 is a bevel gear.

Furthermore, in order to distribute the power to the wheels, the transmission device T comprises a pair of axle shafts 4, 5, which extend along an output axis B in opposite directions to one another.

The axle shafts 4, 5 comprise respective first ends 4a, 5a connected to the wheels and second ends 4b, 5b, which respectively carry in a fixed position a pair of side gears 6, 7.

The side gears 6, 7 are rotatable about the output axis B and face one another along the output axis B, which is perpendicular to the input axis A. Like the pinion 3, also the side gears 6, 7 are, in particular, bevel gears.

The side gears 6, 7 define two sun gears of an epicyclic gearing which is part of the transmission device T and which also includes the pinion 3. The pinion 3 is coupled to both side gears 6, 7, such that the inputted power is transferred to the axle shafts 4, 5.

More specifically, the epicyclic gearing includes an annular crown gear 8, which is arranged around the output axis B and meshes with the pinion 3.

The epicyclic gearing further includes a differential housing or planet gear cage 9, which is supported by the outer case G in a rotatable manner about the output axis B and carries in a fixed position the annular crown gear 8.

The epicyclic gearing further includes a carrier 10, which is arranged around the output axis B and carried in a fixed position by the planet gear cage 9. The carrier, in turn, carries in a fixed position a plurality of planet gears 11, in particular of bevel type, in a rotatable manner about the respective axes C.

In particular, the axes C are all orthogonal to the output axis B and incident in a point thereof.

Each of the planet gears 11 mesh with both the two side gears 6, 7. The axle shafts 4, 5 are thus coupled to the planet gear cage 9 in a rotatable manner with respect to the latter.

The planet gear cage 9 internally defines a cavity which houses at least a portion of the carrier 10, the planet gears 11, the side gears 6, 7, as well as the respective ends 4b, 5b of the axle shafts 4, 5.

As inferable from what described above, the epicyclic gearing is more precisely a classic motor vehicle differential the functioning of which is widely known in the field and therefore not described in detail for brevity.

The differential assembly 1 further comprises a clutch for the locking of the differential, i.e. for constraining the two axle shafts 4, 5 to rotate integrally with the planet gear cage 9. In this manner, the differential temporarily loses its property of differentiating the output speeds of the axle shafts 4, 5, as a function of the resisting torques exerted on the wheels.

The clutch has a first clutch portion 14, which is coupled to the planet gear cage 9 in an axially mobile and angularly fixed manner. In other words, the first clutch portion 14 can move along the output axis B but cannot have relative rotations with respect to the planet gear cage 9.

Furthermore, the clutch has a second clutch portion 15, which is carried in a fixed position by the side gear 7.

The clutch portions 14, 15 are configured to engage with one another. More specifically, the clutch portion 14 can assume at least a locking position, in which it engages with the clutch portion 15 fixed with respect to the side gear 7.

When the clutch portions 14, 15 engage with one another, the planet gear cage 9 and the side gear 7 become angularly fixed with respect to one another. When instead the clutch portions 14, 15 are separate from one another, the side gear 7 is free to rotate with respect to the planet gear cage 9.

Specifically, the clutch is of the frontal jaw type. In other words, one portion between the clutch portions 14, 15 comprises a plurality of teeth 16 which extend according to respective directions parallel to the axis B and are shaped to be inserted into corresponding axial cavities formed on the other portion between the clutch portions 14, 15.

In particular, the teeth 16 are part of the clutch portion 15 and protrude, more specifically, from the side gear 7 which, in the illustrated embodiment, defines the clutch portion 15.

The clutch portion 14 is arranged with respect to the planet gear cage 9 such that the teeth 16 are axially aligned with the corresponding cavities.

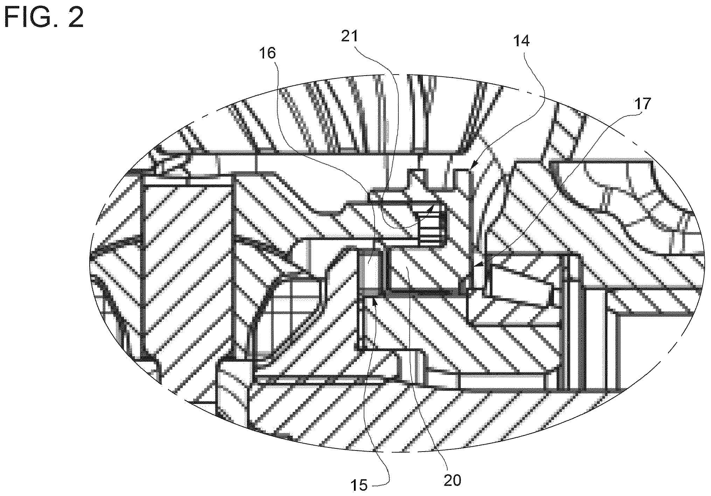

More specifically, the clutch portion 14 comprises a sleeve element 17 (Figure 2) coupled in an axially sliding manner to the planet gear cage 9 outside the cavity defined by the latter.

In particular, the outer surface of the planet gear cage 9 and the inner surface of the sleeve element 17 define respective splined profiles complementary to one another, thus the planet gear cage 9 and the sleeve element 17 define an axially sliding splined coupling.

In order for the coupling between the clutch portions 14, 15 to take place regularly inside the cavity defined by the planet gear cage 9, the clutch portion 14 has a plurality of protruding elements 20, in particular protruding axially from the sleeve element 17.

The protruding elements 20 are inserted inside the cavity by means of corresponding through openings formed on the planet gear cage 9.

The openings of the planet gear cage 9 are axially aligned with the protruding elements 20 which, specifically, have the cavities in which the teeth 16 are inserted. More specifically, the same cavities axially extend starting from the ends of the protruding elements 20 opposite with respect to the sleeve element 17.

In particular, the splines of the splined coupling are formed also on the protruding elements 20, which slide on the planet gear cage 9.

Therefore, the sleeve element 17 and the splines formed thereon are completely placed outside the planet gear cage 9, i.e. outside the cavity. The sleeve element 17 always remains outside the cavity and the cage 9 in any operating position. Conversely, the protruding elements 20 (protruding from the sleeve element 17) are inserted inside the cavity.

Furthermore, the clutch portion 14 and more specifically the sleeve element 17 defines a plurality of recesses 21 in axial direction, which are engaged by the planet gear cage 9.

Preferably, the recesses 21 are internally splined in a complementary manner to the portions of the planet gear cage 9 engaging them, therefore a further splined coupling is defined by the recesses 21 and by the planet gear cage 9.

The portions of the planet gear cage 9 which engage the recesses 21 have respective outer surfaces that are part of the outer surface of the planet gear cage 9.

The latter outer surfaces develop in circumferential direction around the axis B.

In order to carry the clutch portion 14 in the locking position, the differential assembly 1 further comprises an actuator device 23, in particular of electric or pneumatic type.

The actuator device 23 is coupled to the clutch portion 14, more specifically to the sleeve element 17, and is configured to move the clutch portion 14 between the locking position and a further position, in which the clutch portion 15 is spaced from the clutch portion 14.

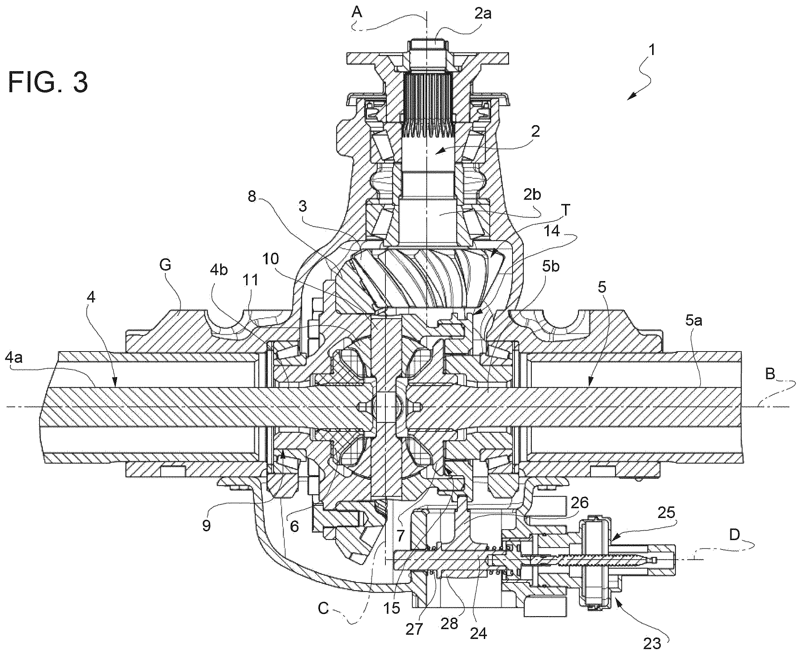

In other words, in the further position with respect to the locking one, illustrated for example in Figure 3, the clutch portions 14, 15 are separate and free to rotate with respect to one another. Here, the differential assumes its ordinary function, well known in the prior art.

In the illustrated embodiment, the actuator device 23 comprises a rod 24 movable along a direction D parallel to the output axis B. The actuator device 23 further includes an actuation mechanism 25, in particular of the internal thread screw type, coupled to the rod 24 so as to transmit thereto a translation movement along the axis D.

The rod 24 is fixed with respect to the clutch portion 14 by means of a connection pin 26 fixed on one side to the rod 24 and on the other side to the clutch portion 14 (more specifically to the sleeve element 17).

Furthermore, the rod 24 is inserted by means of a corresponding axial opening formed on the outer case G, without sliding thereon.

Conveniently, an elastic element 27 is interposed between a radially protruding ring 28 of the rod 24 and the outer case G; the elastic element 27, for example a helical spring, is pre-loaded so as to exert on the rod 24 a force directed in a direction moving away from the locking position.

Based on what described above, the advantages of the differential assembly 1 according to the invention are evident.

The fact that the clutch portion 14 is angularly fixed with respect to the planet gear cage 9, instead of to the axle shaft 5, allows the clutch portions 14, 15 to have an increased diameter, thus the forces released on the engaged parts, i.e. on the teeth 16, are reduced. In fact, the force received by the teeth 16 is supplied by the torque exerted on the axle shaft 5 divided by an increased arm defined by the portion that carries the same teeth 16. Consequently, it is possible to manufacture shorter teeth 16 that enable a simpler coupling between the clutch portions 14, 15.

The frontal clutch allows the driver of a vehicle which is equipped with a differential assembly 1 to actuate the locking of the differential without the necessary condition of a stationary vehicle.

In fact, with respect to radial clutches, the frontal clutch requires a reduced axial stroke to work correctly. This is due to the fact that the radial clutches require the mutual coupling of splined profiles having a relatively high axial length and a high number of splines.

This means that the time for completing the coupling is greater for a radial clutch with respect to a frontal clutch, thus a coupling in movement with the radial clutch is not possible.

Furthermore, the shape of the teeth 16 of the frontal clutch can be manufactured such that the coupling tolerances are better than the case of the radial clutch, thus also a slight axial misalignment between the clutch portions 14, 15 can be recovered during the coupling, which occurs rapidly due to the relatively reduced necessary axial stroke.

On the other hand, the external placing of the clutch portion 14 with respect to the planet gear cage 9 makes the differential assembly 1 particularly compact with respect to the known solutions.

More specifically, with respect to US2008/0182702 A1, wherein one of the clutches is completely inside the differential housing so as to be actuated from the outside by means of a plurality of components all coupled to one another in a complex manner, the clutch portion 14 is manufactured in a single body simply slidable outside the planet gear cage 9 by means of a splined coupling.

The placing of the clutch portion 14 and its coupling to the planet gear cage 9 allow a simple actuation by means of the actuator device 23, which can be commonly identified in the actuator market. The actuator device 23 is simply coupled to the planet gear cage 9, without the need to be driven into rotation by the latter as is the case in US2008/0182702 A1.

Furthermore, the shape of the recesses 21 and of the portions of the planet gear cage 9 which engage the recesses 21 further facilitates the axial sliding of the clutch portion 14, without the need of complicated connections subject to damage due to wear and tear.

Since the differential assembly 1 is manufactured with a minimum number of components, it is also reliable, for example more reliable than the differential assembly of US2008/0182702 A1 which, on the contrary, has a significant number of sliding components with respect to one another.

Finally, it is clear that modifications and variants can be made to the differential assembly 1 according to the present invention which however do not depart from the scope of protection defined by the claims.

In particular, the clutch portion 15 could be carried in a fixed position by the side gear 6, instead of by the side gear 7. Otherwise, the clutch portion 15 could also be carried by another rotating member inside the planet gear cage 9 such as, for example, the ends 4b, 5b of the axle shafts 4, 5, i.e. the planet gears 11. Furthermore, the shapes of the clutch portions 14, 15, could be different from those described and illustrated. The clutch portion 14 could have a single annular protrusion or having annular sector for the insertion inside the cavity defined by the planet gear cage 9. Finally, the clutch portion 14 could be replaced by a different portion slidable on an inner surface of the planet gear cage 9, instead of an outer surface.

In the description, terms such as "axial", "axially", and the like are to be understood with reference to the output axis B.

## Claims

1. A vehicular differential assembly (1) comprising:
- a planet gear cage (9) rotatable about an axis (B) and defining an internal cavity;
- a member (7) arranged at least partially inside said cavity in a rotatable manner about the axis (B);
- a first clutch portion (14) coupled to the planet gear cage (9) in an axially movable and angularly fixed manner;
- a second clutch portion (15) carried by said member (7) in a fixed position and configured to engage with the first clutch portion (14), such that said member (7) and said planet gear cage (9) become angularly fixed with respect to one another; and
- actuator means (23) configured to move the first clutch portion (14) along the axis (B) between a first position, in which the second clutch portion (15) is spaced from the first clutch portion (14), and a second position, in which the second clutch portion (15) is engaged with the first clutch portion (14);
wherein the first clutch portion (14) comprises a sleeve element (17) arranged in a sliding manner on the planet gear cage (9) outside said cavity,
and wherein the planet gear cage (9) and the sleeve element (17) define, outside said cavity, an axially sliding splined coupling.

2. The differential assembly according to claim 1, wherein the splined coupling is defined by an outer surface of the planet gear cage (9) and by an inner surface of the sleeve element (17).

3. The differential assembly according to claim 1, further comprising:
- a plurality of planet gears (11) supported by the planet gear cage (9) inside said cavity and in a rotatable manner about respective further axes (C) distinct from said axis (B) ;
- a pair of sun gears (6, 7), which are coupled to the planet gear cage (9) inside said cavity and in a rotatable manner about said axis (B), along which they are facing one another, so as to both mesh with each of the planet gears (11); and
- a pair of axle shafts (4, 5), which respectively carry the sun gears (6, 7) in a fixed position and extend along said axis (B) in opposite directions to one another;
wherein one of said sun gears (6, 7) or of said axle shafts (4, 5) defines said member.

4. The differential assembly according to any one of the preceding claims, wherein the first clutch portion (14) comprises at least one protruding element (20) which extends parallel to said axis (B); the planet gear cage (9) comprising at least one opening arranged axially at the protruding element (20), so as to allow an axial insertion thereof inside said cavity during a movement of the first clutch portion (14) from the first to the second position.

5. The differential assembly according to any one of the preceding claims, wherein the first clutch portion (14) defines at least a further cavity engaged in an axially sliding manner by the planet gear cage (9) at least when the first clutch portion (14) is in the second position.

6. The differential assembly according to claim 5, wherein the further cavity is defined by a recess (21) of the first clutch portion (14) in an axial direction.

7. The differential assembly according to claim 6, wherein the recess (21) is internally splined in a complementary manner to a portion of surface of the planet gear cage (9) which engages the recess (21).

8. The differential assembly according to claim 7, wherein said portion of surface is a portion of outer surface of the planet gear cage (9).

9. The differential assembly according to any one of the preceding claims, wherein a portion between the first and the second clutch portions (14, 15) carries a plurality of teeth (16) which extend along respective directions parallel to said axis (B); the other portion between the first and the second clutch portions (14, 15) having a plurality of cavities which extend respectively along said directions so as to be axially engageable by said teeth (16) when the first clutch portion (14) is in the second position.
